# EUROPÄISCHE PATENTSCHRIFT

(11) **EP 4 607 161 B1**
(45) Veröffentlichungstag und Bekanntmachung des Hinweises auf die Patenterteilung: **01.04.2026**
(21) Anmeldenummer: 24159547.9
(22) Anmeldetag: 26.02.2024
(51) Int. Cl.: G01G 19/02

(54) **VERFAHREN ZUM BESTIMMEN EINES GESAMTGEWICHTS UND VON ACHSLASTEN**
METHOD FOR DETERMINING GROSS COMBINED WEIGHT AND AXLE LOADS
PROCÉDÉ DE DÉTERMINATION D'UN POIDS TOTAL ET DE CHARGES AXIALES

(43) Veröffentlichungstag der Anmeldung: 27.08.2025
(73) Patentinhaber: Waagenbau Dohmen GmbH, 52146 Würselen (DE)
(72) Erfinder: Dohmen, Marvin, 52531 Übach-Palenberg (DE); Dohmen, Peter, 52477 Alsdorf (DE); Dohmen, Martin, 52477 Alsdorf (DE); Dohmen, Torsten, 52146 Würselen (DE)
(74) Vertreter: Bauer, Dirk

(56) Entgegenhaltungen:
- FR-A1- 2 932 260
- US-A- 6 137 066

## Beschreibung

Die Erfindung betrifft ein Verfahren zum Bestimmen eines Gesamtgewichts und von Achslasten eines mehrachsigen Fahrzeugs, wobei alle Achsen des Fahrzeugs eine Achslastwaage überfahren, die jeweils eine der Achslasten misst und das Gesamtgewicht als Summe der Achslasten bestimmt wird.

EP 2 212 660 B1 schlägt vor, für ein solches Verfahren rund ein Dutzend Achslastwaagen hintereinander anzuordnen und alle von diesen gemessenen Werte in die Bestimmung des Gewichts einzubeziehen, um durch Beschleunigen oder Bremsen des Fahrzeugs beim Überfahren verfälschte Messwerte auszuschließen.

### Aufgabe

Der Erfindung liegt die Aufgabe zugrunde, das Gesamtgewicht zuverlässig zu bestimmen.

### Lösung

Ausgehend von dem bekannten Verfahren wird nach der Erfindung vorgeschlagen, dass für jede der Achsen beim Abfahren des Fahrzeugs von einer der Achslastwaage in einer Fahrtrichtung des Fahrzeugs vorgelagerten ersten Wägebrücke diese einen ersten Lastsprung misst und beim Auffahren des Fahrzeugs auf eine der Achslastwaage in der Fahrtrichtung folgende zweite Wägebrücke diese einen zweiten Lastsprung misst, und das Gesamtgewicht nur dann als vertrauenswürdig angesehen wird, wenn für jede der Achsen jeweils Differenzen des ersten Lastsprungs und des zweiten Lastsprungs von der jeweiligen Achslast vorbestimmte Grenzwerte nicht überschreiten. So werden Gewichtsmanipulationen (u.a. auch durch Beschleunigen oder Abbremsen im dynamischen Betrieb) bei der Auswertung durch das System oder durch den Bediener der Fahrzeugwaage erkennbar.

Achslastwaagen und Wägebrücken sind in eine Fahrbahn einzubauende oder eingebaute Gewichtserfassungssysteme mit einer für Achslastwaagen quer und für Wägebrücken längs zur Fahrtrichtung angeordneten Plattform. Auf einer Achslastwaage findet maximal immer nur genau eine Achse eines in der Fahrtrichtung darüber fahrenden Fahrzeugs Platz. Gängige Achslastwaagen weisen hierzu eine Länge in der Fahrtrichtung von etwa 75 cm auf. Doppelachsen mit größerem Achsabstand werden so als zwei getrennte Einzelachsen gemessen. Auf eine Wägebrücke (auch: Brückenwaage) dagegen passt das Fahrzeug in voller Länge mit allen Achsen.

Die Lastsprünge beim Abfahren von der ersten und beim Auffahren auf die zweite Wägebrücke entsprechen betragsmäßig den Achslasten, die von entsprechend vorgelagerten und folgenden Achslastwaagen gemessen würden. Anhand der bei Wägebrücken kontinuierlich aufgezeichneten Lastverläufe beim Auffahren vom Leerzustand bis zum Gesamtgewicht und beim Abfahren wieder bis zum Leerzustand sind Unregelmäßigkeiten insbesondere durch Beschleunigen oder Abbremsen beim Überfahren deutlich zu erkennen.

Vorzugsweise wird in einem erfindungsgemäßen Verfahren das Gesamtgewicht anschließend statisch bestimmt, wenn es als nicht vertrauenswürdig angesehen wurde. Bei der erfindungsgemäßen (sog. "dynamischen") Gewichtserfassung überfährt das Fahrzeug die Fahrzeugwaage zunächst ohne anzuhalten. So kann eine große Anzahl von Fahrzeugen zügig abgefertigt werden. Nur wenn das Gesamtgewicht auf diese Weise nicht vertrauenswürdig ermittelt werden kann, muss es zeitaufwändiger bei stehendem Fahrzeug ("statisch") bestimmt werden.

Vorzugsweise misst in einem erfindungsgemäßen Verfahren die erste und/oder die zweite Wägebrücke ein Kontrollgewicht, wenn das Fahrzeug sich vollständig auf ihr befindet und das Gesamtgewicht wird nur dann als vertrauenswürdig angesehen, wenn auch eine Differenz des Kontrollgewichts von dem Gesamtgewicht einen vorbestimmten Grenzwert nicht überschreitet. Die Überprüfung anhand der Kontrollgewichte erhöht die Zuverlässigkeit der Messung.

Erfindungsgemäß weist vorzugsweise eine Fahrzeugwaage zum Bestimmen eines Gesamtgewichts eines mehrachsigen Fahrzeugs mit einer Achslastwaage zum Messen je einer Achslast für jede Achse des Fahrzeugs und einem Wägeterminal, das das Gesamtgewicht als Summe der Achslasten bestimmt, eine erste, der Achslastwaage in einer Fahrtrichtung des Fahrzeugs vorgelagerte Wägebrücke und eine zweite, der Achslastwaage in der Fahrtrichtung folgende Wägebrücke auf, wobei das Wägeterminal zum Ausführen eines erfindungsgemäßen Verfahrens eingerichtet ist.

Vorzugsweise ist eine erfindungsgemäße Fahrzeugwaage flurgleich in eine Fahrbahn integriert. Weiter vorzugsweise weisen in einer erfindungsgemäßen Fahrzeugwaage die Achslastwaage, die erste Wägebrücke und die zweite Wägebrücke jeweils mindestens eine in der Fahrbahn beweglich auf mehreren Stützpunkten in einem Untergrund abgestützte Plattform auf. Weiter vorzugsweise weist eine erfindungsgemäße Fahrzeugwaage jeweils eine Wägezelle zwischen der Plattform und dem Untergrund an jedem der Stützpunkte und Datenverbindungen zum Übermitteln von Messwerten der Wägezellen an die Auswerteeinheit auf. Derartige Achslastwaagen und Wägebrücken sind allgemein bekannt. Die Messwerte können über Kabelverbindungen oder drahtlos an die Auswerteeinheit übermittelt werden.

Die erfindungsgemäße Fahrzeugwaage kann außerdem für Nachverwiegungen oder auch für die Verwiegung von Sonderfahrzeugen als Nichtselbsttätige Straßenfahrzeugwaage (nach Richtlinie 2014/31/EU vom 26. Februar 2014) für die statische Ermittlung des Gesamtgewichtes von Fahrzeugen und deren Achslasten bzw. Achsgruppenlasten nach einer Konformitätsbewertung als Waage mit der Genauigkeitsklasse **III** nach **EN** 45501 verwendet werden.

### Ausführungsbeispiel

Die Erfindung wird nachfolgend anhand eines Ausführungsbeispiels erläutert. Es zeigen
- Fig. 1: eine Draufsicht einer erfindungsgemäßen Fahrzeugwaage,
- Fig. 2: eine Seitenansicht der Fahrzeugwaage und
- Fig. 3: ein Messprotokoll der Fahrzeugwaage.

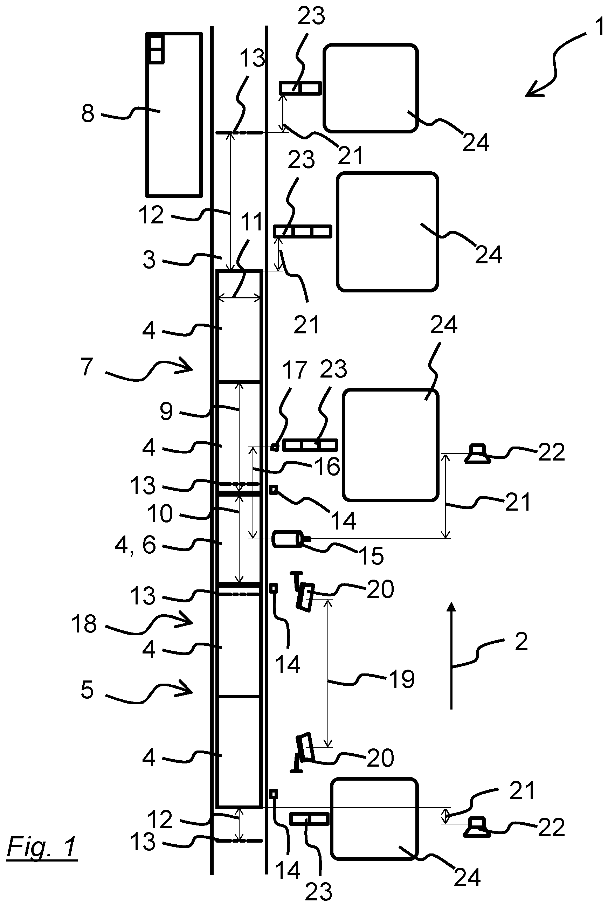

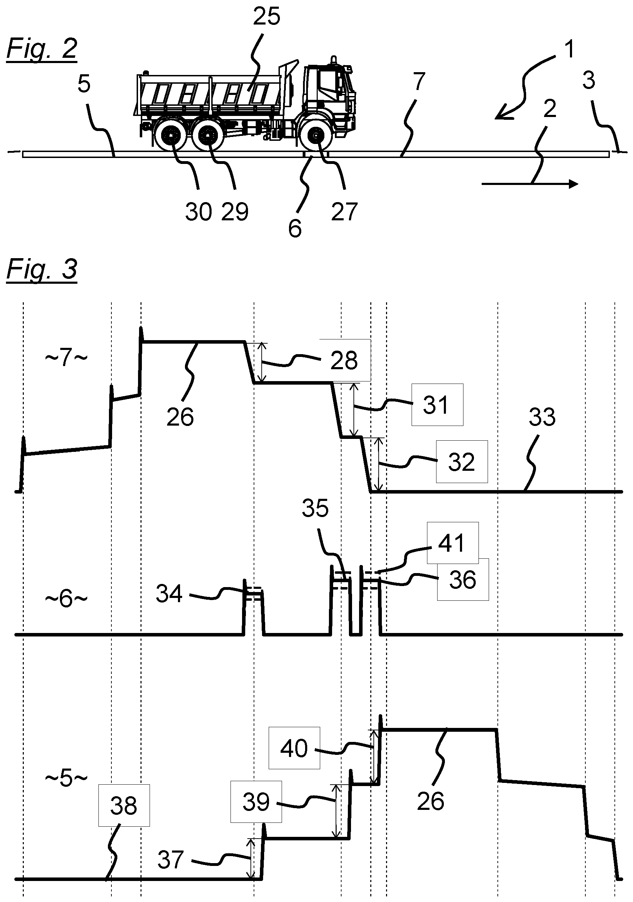

Die in den Figur 1 schematisch und in Figur 2 maßstäblich gezeigte erfindungsgemäße Fahrzeugwaage 1 weist unmittelbar jeweils hintereinander in einer Fahrtrichtung 2 in eine Fahrbahn 3 integrierte Plattformen 4 einer ersten Wägebrücke 5, einer Achslastwaage 6 und einer zweiten Wägebrücke 7 und in der Fahrtrichtung 2 dahinter neben der Fahrbahn 3 einen erhöht aufgebauten Bediencontainer 8 für die Fahrzeugwaage 1 auf.

Die je zwei Plattformen 4 der Wägebrücken 5, 7 weisen in der Fahrtrichtung 2 eine Länge 9 von je 10 m, die Plattform 4 der Achslastwaage 6 eine Länge 10 von 0,8 m auf. Die Plattformen 4 sind als Fertigteile waagrecht und flurgleich in einer nicht dargestellten Unterflur-Fertigteil-Fundamentwanne eingebaut und weisen quer zur Fahrtrichtung 2 eine Spurbreite 11 von 3,2 m auf.

Die Wägebrücken 5, 7 weisen jeweils eine Tragfähigkeit von 2x80 t und eine Wägefähigkeit von 70 t, die Achslastwaage 6 eine Trag- und Wägefähigkeit von 20 t auf. Die Wägebrücken 5, 7 sind Zweibereichswaagen und eichfähig mit einer Teilung von 20 kg bis zu 60 t bzw. 50 kg über 60 t und die Achslastwaage 6 ist eichfähig mit einer Teilung von 20 kg. Bei Belastung der Fahrzeugwaage 1 erfolgt die Krafteinleitung zu DMS-Druckkraft-Wägezellen welche durch Konsolen mit der Fundamentwanne standsicher verbunden sind. Die bei der Befahrung entstehenden Pendelbewegungen der Plattformen 4 werden durch einstellbare Stoßfänger minimiert. Die Wägezellen, Konsolen und Stoßfänger sind gleichfalls nicht dargestellt.

**In** Fahrtrichtung 2 in einem Abstand 12 von 3 m vor der ersten Wägebrücke 5, kurz vor und kurz hinter der Achslastwaage 6 auf den Wägebrücken 5, 7 und 11,5 m hinter der zweiten Wägebrücke 7 weist die Fahrzeugwaage 1 auf der Fahrbahn 3 markierte Haltelinien 13 auf.

Neben der Fahrbahn 3 sind in Fahrtrichtung 2 unmittelbar vor der ersten Wägebrücke 5 sowie jeweils zwischen der Achslastwaage 6 und den Wägebrücken 5, 7 erste Sensoren 14, in Fahrtrichtung 2 mittig neben der Achslastwaage 6 eine erste Kamera 15 und in Fahrtrichtung 2 im Abstand 16 von 3 m hinter der ersten Kamera 15 ein zweiter Sensor 17 sowie am Ende 18 der ersten Wägebrücke 5 und im Abstand 19 von 16 m in Fahrtrichtung 2 davor zweite Kameras 20 angeordnet.

Weiterhin weist die Fahrzeugwaage 1 neben der Fahrbahn 3 im Abstand 21 von 1 m vor der ersten Wägebrücke 5, von 3 m hinter der ersten Kamera 15 Lautsprecher 22 und dort sowie von 2 m hinter der zweiten Wägebrücke 7 und von 5 m hinter der letzten Haltelinie 13 Signalgeber 23 und LED-Großanzeigen auf.

Die in den Wägezellen erzeugten Messwerte werden im Bediencontainer 8 zu einem Wägeterminal weitergeleitet und als Gewichtswert dort und auf dem Monitor eines angeschlossenen PCs angezeigt. Wägeterminal, PC und Monitor sind nicht dargestellt.

Wägeterminal und PC steuern die Fahrzeugwaage 1 einschließlich der Signalgeber 23 und Großanzeigen 24 sowie die Weiterverarbeitung und Speicherung aller Daten einer Messung, insbesondere Wägeart (statisch, dynamisch), Nullpunktüberwachung, Stillstandskontrolle, Positionsüberwachung, Überfahrgeschwindigkeit, Radabstandsvermessung sowie die gemessenen Werte mit Datum und Uhrzeit.

Ein Bediener der Fahrzeugwaage 1 kann durch Fenster des Bediencontainers 8 die Wägebrücken 5, 7 und die Achslastwaage 6 übersehen und einem Fahrzeugführer eines Fahrzeugs 25 besondere Hinweise über die Lautsprecher übermitteln und Papiere durch eine Schiebedurchreiche übergeben. Bediener und Fahrzeugführer, Fenster und Schiebedurchreiche sind wiederum nicht dargestellt.

Die Haltelinien 13 und Sensoren 14, 17 und nicht dargestellte Schrammborde dienen der ordnungsgemäßen Positionierung des die Fahrzeugwaage 1 überfahrenden Fahrzeugs 25.

Figur 3 zeigt die beim Überfahren des Fahrzeugs 25 über die Fahrzeugwaage 1 von der ersten Wägebrücke 5, der Achslastwaage 6 und der zweiten Wägebrücke 7 gemessenen Lastverläufe:
Das beispielsweise auf einer Autobahn vorselektierte Fahrzeug 25 wird auf einem Rastplatz mit einer Ausschilderung "Gewichtskontrolle" zur Fahrzeugwaage 1 geführt und verweilt zunächst an der ersten Haltelinie 13. Die Großanzeigen 24 verweisen auf eine maximale Überfahrgeschwindigkeit von 10 km/h, die Signalgeber 23 leuchten "rot". Nach Inaugenscheinnahme und Begutachtung des Fahrzeuges durch die Fenster des Bediencontainers 8 wählt der Bediener am PC den Modus "selbsttätige dynamische Verwiegung", prüft die Nullstellung der Wägebrücken 5, 7 und der Achslastwaage 6 und startet die Verwiegung, der erste Signalgeber 23 schaltet auf "grün".

Bei der ersten Belastung der ersten Wägebrücke 5 schaltet der erste Signalgeber 23 für ein nicht dargestelltes folgendes Fahrzeug wieder auf "rot". Das Fahrzeug 25 befährt nun ohne Unterbrechung die gesamte Fahrzeugwaage 1. Bei Geschwindigkeitsüberschreitung blinkt der Hinweis "max. 10 km/h" der Großanzeigen 24. Der zweite und dritte Signalgeber 23 ist inaktiv.

Während der Befahrung wird permanent selbsttätig, dynamisch gewogen. Die zuletzt vor dem Abfahren des Fahrzeugs 25 von der ersten Wägebrücke 5 ermittelte Last wird als gemessenes Gesamtgewicht 26 des Fahrzeugs 25 von 22 t gespeichert. Die erste Wägebrücke 5 misst dann beim Abfahren einer ersten Achse 27 des Fahrzeugs 25 einen ersten Lastsprung 28 um 6 t von dem Gesamtgewicht 26 auf 16 t und beim Abfahren einer zweiten Achse 29 und einer dritten Achse 30 des Fahrzeugs 25 einen weiteren ersten Lastsprung 31 um 8 t von 16 t auf 8 t und einen weiteren ersten Lastsprung 32 um 8 t von 8 t auf eine Nulllinie 33.

Die Achslastwaage 6 misst beim Überfahren der ersten Achse 27 eine erste Achslast 34 von 6 t und beim Überfahren der zweiten Achse 29 und der dritten Achse 30 eine zweite Achslast 35 und eine dritte Achslast 36 von je 8 t. Sollte das Fahrzeug 25 zwischenzeitlich die Achslastwaage 6 rückwärts verlassen, so wird dies von der Fahrzeugwaage 1 erkannt. Der Bediener veranlasst dann eine Nachkontrolle.

Die zweite Wägebrücke 7 misst beim Auffahren der ersten Achse 27 einen zweiten Lastsprung 37 von der Nulllinie 38 auf 6 t und beim Auffahren der zweiten Achse 29 einen weiteren zweiten Lastsprung 39 um 8 t von 6 t auf 14 t und beim Auffahren der dritten Achse 30 einen weiteren zweiten Lastsprung 40 um 8 t von 14 t auf das Gesamtgewicht 26.

Die Messungen der ersten Wägebrücke 5 beim Auffahren und der zweiten Wägebrücke 7 beim Abfahren des Fahrzeugs 25 werden gemäß OIML R 134-2 als unzuverlässig wegen hier möglicher Fehlmessung durch Schrägstellungen des Fahrzeugs 25 auf der Fahrbahn 3 nicht erfasst. In einem anderen erfindungsgemäßen Verfahren können auch weitere Messungen beim Auffahren auf und/oder Abfahren von den Plattformen 4 der Wägebrücken 5, 7 erfasst und ausgewertet werden.

Die zweiten Kameras 20 erfassen während der Befahrung ein vorderes und ein hinteres KFZ-Kennzeichen des Fahrzeugs 25 für die Zuordnung der gemessenen Gewichte durch den Bediener zum Zugfahrzeug oder zum Anhänger bzw. Auflieger. Das Fahrzeug 25 kann nun abschließend bis zur letzten Haltelinie 13 vorfahren und im PC erfolgt eine Auswertung durch den Bediener.

Das Gesamtgewicht des Fahrzeugs 25 wird von der Fahrzeugwaage 1 als Summe der Achslasten 34, 35, 36 bestimmt und als vertrauenswürdig angesehen, wenn Differenzen der von den Wägebrücken 5, 7 gemessenen Gesamtgewichte 26 von dieser Summe, der Lastsprünge 28, 31, 32, 37, 39, 40 von der jeweiligen Achslast 34, 35 36 einen (in Figur 3 unmaßstäblich dargestellten) Grenzwert 41 von 4 % nicht überschreiten.

Die Verwiegung ist hiermit abgeschlossen. Eichrelevante Gesamtgewichte und Achslasten 34, 35, 36 mit dazu gehörenden Referenzierungen werden in einem Alibispeicher des Wägeterminals hinterlegt. Der Fahrzeugführer wird über die letzte Großanzeige 24 auf eine mögliche Überladung hingewiesen oder zur nicht zu beanstandenden Weiterfahrt aufgefordert. Der letzte Signalgeber 23 wird bei Freigabe durch den Bediener auf "grün" geschaltet.

Bei einer anderen Verwiegung des Fahrzeugs 25 wird auf der Achslastwaage 6 die erste Achslast 34 wegen Bremsung des Fahrzeugs 25 beim Überfahren der Fahrzeugwaage 1 mit 8 t gemessen, während die übrigen Messwerte den oben genannten entsprechen. Das als Summe der Achslasten 34, 35, 36 bestimmte Gesamtgewicht von 24 t wird dann als nicht vertrauenswürdig angesehen, weil die jeweils ersten Lastsprünge der Wägebrücken 5, 7 um 2 t von der ersten Achslast 34 abweichen und die Differenz damit den Grenzwert von hier 0,32 t (4 % von 8 t) überschreitet.

Der Fahrzeugführer wird dann über die letzte Großanzeige 24 auf eine erforderliche Nachkontrolle mit Angaben zur Kontrollstelle hingewiesen. Die Nachkontrolle kann durch statische Verwiegung auf der Achslastwaage 6 und/oder den Wägebrücken 5 und 7 erfolgen.

In den Figuren sind
- 1: Fahrzeugwaage
- 2: Fahrtrichtung
- 3: Fahrbahn
- 4: Plattform
- 5: erste Wägebrücke
- 6: Achslastwaage
- 7: zweite Wägebrücke
- 8: Bediencontainer
- 9: Länge der Plattformen der Wägebrücken
- 10: Länge der Plattform der Achslastwaage
- 11: Spurbreite
- 12: Abstand
- 13: Haltelinie
- 14: Sensor
- 15: Kamera
- 16: Abstand
- 17: Sensor
- 18: Ende der ersten Wägebrücke
- 19: Abstand
- 20: Kamera
- 21: Abstand
- 22: Lautsprecher
- 23: Signalgeber
- 24: Großanzeige
- 25: Fahrzeug
- 26: gemessenes Gesamtgewicht
- 27: erste Achse
- 28: erster Lastsprung zur ersten Achse
- 29: zweite Achse
- 30: dritte Achse
- 31: erster Lastsprung zur zweiten Achse
- 32: erster Lastsprung zur dritten Achse
- 33: Nulllinie
- 34: erste Achslast
- 35: zweite Achslast
- 36: dritte Achslast
- 37: zweiter Lastsprung zur ersten Achse
- 38: Nulllinie
- 39: zweiter Lastsprung zur zweiten Achse
- 40: zweiter Lastsprung zur dritten Achse
- 41: Grenzwert

## Patentansprüche

1. Verfahren zum Bestimmen eines Gesamtgewichts und von Achslasten (34, 35, 36) eines mehrachsigen Fahrzeugs (25), wobei alle Achsen (27, 29, 30) des Fahrzeugs (25) eine Achslastwaage (6) überfahren, die jeweils eine der Achslasten (34, 35, 36) misst und das Gesamtgewicht als Summe der Achslasten (34, 35, 36) bestimmt wird, ***dadurch gekennzeichnet, dass*** für jede der Achsen (27, 29, 30)
a. beim Abfahren des Fahrzeugs (25) von einer der Achslastwaage (6) in einer Fahrtrichtung (2) des Fahrzeugs (25) vorgelagerten ersten Wägebrücke (5) diese einen ersten Lastsprung (28, 31, 32) misst und
b. beim Auffahren des Fahrzeugs (25) auf eine der Achslastwaage (6) in der Fahrtrichtung (2) folgende zweite Wägebrücke (7) diese einen zweiten Lastsprung (37, 39, 40) misst,
und das Gesamtgewicht nur dann als vertrauenswürdig angesehen wird, wenn für jede der Achsen (27, 29, 30) jeweils Differenzen des ersten Lastsprungs (28, 31, 32) und des zweiten Lastsprungs (37, 39, 40) von der jeweiligen Achslast (34, 35, 36) vorbestimmte Grenzwerte nicht überschreiten.

2. Verfahren nach dem vorgenannten Anspruch, ***dadurch gekennzeichnet, dass*** das Gesamtgewicht anschließend statisch bestimmt wird, wenn es als nicht vertrauenswürdig angesehen wurde.

3. Verfahren nach einem der vorgenannten Ansprüche, ***dadurch gekennzeichnet, dass*** die erste und/oder die zweite Wägebrücke (7) ein Kontrollgewicht misst, wenn das Fahrzeug (25) sich vollständig auf ihr befindet und das Gesamtgewicht nur dann als vertrauenswürdig angesehen wird, wenn auch eine Differenz des Kontrollgewichts von dem Gesamtgewicht einen vorbestimmten Grenzwert nicht überschreitet.

4. Fahrzeugwaage (1) zum Bestimmen eines Gesamtgewichts und von Achslasten (34, 35, 36) eines mehrachsigen Fahrzeugs (25) mit einer Achslastwaage (6) zum Messen je einer der Achslasten (34, 35, 36) für jede Achse (27, 29, 30) des Fahrzeugs (25) und einem Wägeterminal, das das Gesamtgewicht als Summe der Achslasten (34, 35, 36) bestimmt, ***gekennzeichnet durch*** eine erste, der Achslastwaage (6) in einer Fahrtrichtung (2) des Fahrzeugs (25) vorgelagerte Wägebrücke (5) und eine zweite, der Achslastwaage (6) in der Fahrtrichtung (2) folgende Wägebrücke (7), wobei das Wägeterminal zum Ausführen eines Verfahrens nach einem der Ansprüche 1-3 eingerichtet ist.

5. Fahrzeugwaage (1) nach dem vorgenannten Anspruch, ***dadurch gekennzeichnet, dass*** die Fahrzeugwaage (1) flurgleich in eine Fahrbahn (3) integriert ist.

6. Fahrzeugwaage (1) nach dem vorgenannten Anspruch, ***dadurch gekennzeichnet, dass*** die Achslastwaage (6), die erste Wägebrücke (5) und die zweite Wägebrücke (7) jeweils mindestens eine in der Fahrbahn (3) beweglich auf mehreren Stützpunkten in einem Untergrund abgestützte Plattform (4) aufweisen.

7. Fahrzeugwaage (1) nach dem vorgenannten Anspruch, ***gekennzeichnet durch*** jeweils eine Wägezelle zwischen der Plattform (4) und dem Untergrund an jedem der Stützpunkte und Datenverbindungen zum Übermitteln von Messwerten der Wägezellen an die Auswerteeinheit.

## Claims

1. Method for determining a gross weight and axle loads (34, 35, 36) of a multi-axle vehicle (25), wherein all axles (27, 29, 30) of the vehicle (25) travel over an axle load scale (6), which respectively measures one of the axle loads (34, 35, 36), and the gross weight is determined as a sum of the axle loads (34, 35, 36), ***characterized in that*** for each of the axles (27, 29, 30)
a. when the vehicle (25) drives off of a first weighbridge (5), located upstream of the axle load scale (6) in a direction of travel (2) of the vehicle (25), said weighbridge measures a first load jump (28, 31, 32), and
b. when the vehicle (25) drives up onto a second weighbridge (7), following the axle load scale (6) in the direction of travel (2), said weighbridge measures a second load jump (37, 39, 40),
and the gross weight is then only considered to be trustworthy if, for each of the axles (27, 29, 30), respective differences of the first load jump (28, 31, 32) and of the second load jump (37, 39, 40) from the respective axle load (34, 35, 36) do not exceed predetermined threshold values.

2. Method according to the preceding claim, ***characterized in that*** the gross weight is subsequently statically determined, if it was not considered to be trustworthy.

3. Method according to one of the preceding claims, ***characterized in that*** the first and/or the second weighbridge (7) measures a control weight when the vehicle (25) is not completely located on said weighbridge, and the gross weight is then only considered to be trustworthy if a difference of the control weight from the gross weight also does not exceed a predetermined threshold value.

4. Weighbridge (1) for determining a gross weight and axle loads (34, 35, 36) of a multi-axle vehicle (25) having an axle load scale (6) for measuring each one of the axle loads (34, 35, 36) for each axle (27, 29, 30) of the vehicle (25) and a weighing terminal, which determines the gross weight as a sum of the axle loads (34, 35, 36), ***characterized by*** a first weighbridge (5), located upstream of the axle load scale (6) in a direction of travel (2) of the vehicle (25), and a second weighbridge (7), following the axle load scale (6) in the direction of travel (2), wherein the weighing terminal is equipped for carrying out a method according one of claims 1-3.

5. Weighbridge (1) according to the preceding claim, ***characterized in that*** the weighbridge (1) is integrated into a roadway (3) level with the surface.

6. Weighbridge (1) according to the preceding claim, ***characterized in that*** the axle load scale (6), the first weighbridge (5) and the second weighbridge (7) each have in the roadway (3) at least one platform (4) supported to be movable on multiple support points in a substrate.

7. Weighbridge (1) according to one of the preceding claims, ***characterized by*** a load cell, in each case between the platform (4) and the substrate at each of the support points, and data connections to transmit measured values from the load cells to the evaluation unit.

## Revendications

1. Procédé, destiné à déterminer un poids total en charge ou des charges par essieu (34, 35, 36) d'un véhicule (25) à plusieurs essieux, tous les essieux (27, 29, 30) du véhicule (25) franchissant une balance (6) de pesage des essieux, qui mesure chaque fois l'une des charges par essieu (34, 35, 36) et le poids total en charge étant déterminé en tant que somme de la charge par essieu (34, 35, 36), **caractérisé en ce que** pour chacun des essieux (27, 29, 30)
a. lorsque le véhicule (25) démarre, une première plateforme de pesage (5) montée en amont de la balance (6) de pesage des essieux dans une direction de déplacement (2) du véhicule (25) mesure cette première brusque variation de charge (28, 31, 32) et
b. lorsque le véhicule (25) aborde une deuxième plateforme de pesage (7) suivant la balance (6) de pesage des essieux dans la direction de déplacement (2), celle-ci mesure cette deuxième brusque variation de charge (37, 39, 40),
et le poids total en charge n'est alors considéré comme étant fiable que si pour chacun des essieux (27, 29, 30), chaque fois des différences entre la première brusque variation de charge (28, 31, 32) et la deuxième brusque variation de charge (37, 39, 40) de la charge par essieu (34, 35, 36) respective n'excèdent pas des valeurs limites prédéfinies.

2. Procédé selon la revendication précédente, **caractérisé en ce que**, par la suite, le poids total en charge est déterminé statiquement, s'il n'a pas été considéré comme étant fiable.

3. Procédé selon l'une quelconque des revendications précédentes, **caractérisé en ce que** la première et / ou la deuxième plateforme de pesage (7) mesure un poids de contrôle lorsque le véhicule (25) est entièrement placé sur cette dernière et le poids total en charge n'est considéré comme étant fiable que si également une différence entre le poids de contrôle et le poids total en charge n'excède pas une valeur limite prédéfinie.

4. Pont-bascule (1), destiné à déterminer un poids total en charge et des charges par essieu (34, 35, 36) d'un véhicule (25) à plusieurs essieux à l'aide d'une balance (6) de pesage des essieux pour mesurer chaque fois l'une des charges par essieu (34, 35, 36) pour chaque essieu (27, 29, 30) du véhicule (25) et d'un terminal de pesage, qui détermine le poids total en charge en tant que somme des charges par essieu (34, 35, 36), **caractérisé par** une première plateforme de pesage (5), placée en amont de la balance (6) de pesage des essieux dans une direction de déplacement (2) du véhicule (25) et par une deuxième (plateforme de pesage (7), suivant la balance (6) de pesage des essieux dans la direction de déplacement (2), le terminal de pesage étant configuré pour réaliser un procédé selon l'une quelconque des revendications 1 à 3.

5. Pont-bascule (1) selon la revendication précédente, **caractérisé en ce que** le pont-bascule (1) est intégré au ras du sol dans une voie de circulation (3).

6. Pont-bascule (1) selon la revendication précédente, **caractérisé en ce que** la balance (6) de pesage des essieux, la première plateforme de pesage (5) et la deuxième plateforme de pesage (7) comportent chacune au moins une plateforme (4) appuyée en étant mobile sur plusieurs points d'appui dans le sol dans la voie de circulation (3).

7. Pont-bascule (1) selon la revendication précédente, **caractérisé par** chaque fois une cellule de pesage entre la plateforme (4) et le sol sur chacun des points d'appui et par des connexions de données, pour transmettre des valeurs de mesure des cellules de pesage vers l'unité d'évaluation.
